# EUROPEAN PATENT SPECIFICATION

(11) **EP 0 652 395 B1**
(45) Date of publication and mention of the grant of the patent: **02.12.1998**
(21) Application number: 94850169.7
(22) Date of filing: 03.10.1994
(51) Int. Cl.: F16L 1/00, F16B 11/00, F16B 19/00

(54) **Method for joining together two tube ends**
Verbindungsverfahren zweier Rohre
Méthode de joindre deux tubes

(30) Priority: 05.10.1993 SE 9303259
(43) Date of publication of application: 10.05.1995
(73) Proprietor: PROFILGRUPPEN I ASEDA AB, 360 70 Aseda (SE)
(72) Inventor: Reinecke, Karl, S-360 70 Aseda (SE)
(74) Representative: Roth, Ernst Adolf Michael

(56) References cited:
- EP-A- 0 007 065
- WO-A-93/08421
- DE-B- 1 037 342
- DE-C- 846 644
- US-A- 4 128 356

## Description

### TECHNICAL FIELD

The present invention refers to a method for joining together two tube ends by means of a connection member which is made of an elastic material, for example plastic, and comprising at least one substantially cylindric dowel which is insertable into the end of the tubular profile and at least one peripherally outwards from the envelope surface of the dowel protruding flange for axial positioning of the connection member in the tube end.

### BACKGROUND OF THE INVENTION

Welding is frequently used, when a permanent connection is to be made between two metal tube ends. Welding is a method which requires relatively great investments in machine equipment. In general, a welded joint must be grinded and treated with a corrosion preventing agent. The welding can cause material weakness in areas adjacent the welding.

Adhesive bonding with connection members can also be used to achieve a permanent connection between two meta pipe ends. However, this method is demanding with reference the gap between the inside surfaces of the tube ends and the outside surfaces of the connection member, which gap should not be larger than some hundreds of a millimetre. Therefore, adhesive bonding while jointing for example two aluminium tube ends, generally implies that the surfaces in the area of connection must be machined with bigger exactness than the usual production tolerances.

Production engineering is mostly aimed at restriction of weight and optimizing the durability of a product, for better ise of the material. At the same time, it is desirable that production is simplified and costs are reduced.

Bonding of tubes which have been bent to a certain radius has been especially difficult to accomplish, since the deflection causes a certain uncontrollable ovality in the transection of the tube. This ovality is difficult to correct, whithout ending up with a joint area which has a different section from the rest of the tube.

In DE-C-846.644 there is disclosed an adhesive joining cf for example tube members by using a connection member having a stepped configuration adapted to fit with a correspondingly stepped interior surface of the tube members to be connected.

DE-B-1.037.342 discloses a plug for connecting framwork profiles. The plug is inserted in holes in the profiles to be connected and is provided with a longitudinal slot which makes the plug compressible and thus provide a firm connection. This plug is not intended for the connection of tube profiles.

EP-A-7,065 discloses a connection member made of an elastic material, comprising a cylindrical dowel which is insertable into the end of a tubular profile and a peripheral flange protruding from the envelope surface of the dowel for axial positioning of the connection member in the tube end.

### THE TECHNICAL PROBLEM

On purpose with the present invention is to provide a method for joining together two tube ends, or to mount a component into the end of a tube, without the need of welding or cost consuming precision machining.

### THE SOLUTION

The method according to the invention is characterized in compressing the connection member, so that its external dimensions are smaller than the inner diameter of the tube ends, which is accomplished by the fact that said connection member is provided with a slot extending in the same plane as the longitudinal axis of the dowel, from its surface and radially beyond the area of said longitudinal axis, inserting the connection member into one of the tube ends, subsequently releasing of the compression of the connection member, and sliding the other tube end onto the connection member.

### DESCRIPTION OF THE DRAWINGS

The invention will be described here below with reference to an embodiment which is shown on the enclosed drawing, in which
- Fig. 1: shows a connection member according to the invention in a side view,
- Fig. 2: is a bottom view of the connection member, and
- Fig. 3: shows the connection member mounted in two tube ends.

### DESCRIPTION OF EMBODIMENT

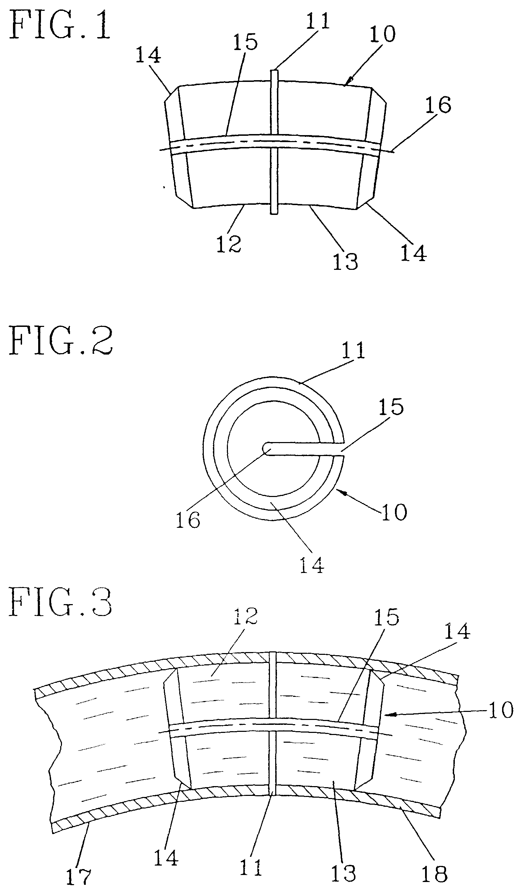

The connection member 10 shown in Fig. 1 is made of a plastic, for example polyamide, which is a material being rigid in shape and tenacious. The connection member 10 has a substantially cylindric shape with a peripherally outwards from the envelope surface protruding flange 11 which divides the envelope surface into two equally large dowel halves 12, 13.

Both ends of the connection member are provided with conical chamfering 14. A slot 15 extends in parallel with the longitudinal axis of the dowel 16, into to the area of said longitudinal axis, and more exactly, a little beyond the centre of the cylinder.

The connection member 10 shown in the figures, is intended for use when joining the two ends of a tubular profile which has been bent into a circular ring. Such rings are for example used grip rings on wheel-chair wheels, and are supposed to be light and able to withstand high stress.

In order to make the best possible connection between the connection member 10 and the ends 17, 18 of the ring shaped tubular profile, the connection member is made in such a manner, that its longitudinal axis follows the median radius of the tubular profile. The slot 15 is oriented, so that it extends into in the connection member with an angle of approximately 90° perpendicular to the radius of bending of the longitudinal axis 16.

When mounting the connection, adhesive is applied, for example cyanoacrylate which is suitably for use in conjunction with anodized aluminum, into the respective tube end 17, 18. Subsequently, a connection member 10 is oriented so that the slot substantially perpendicular to the ring plane. Then, the connection member is compressed so that its external dimensions are smaller than the inner diameter of the tube ends. Subsequently, the connection member is pushed into one of the tube ends, after which the compression of the connection member is released. Finally, the other tube end is pressed onto the connection member.

The connection member is designed so that it can easily be compressed and inserted into a tube end, after which it is allowed to expand out to the inside of the tube end. Hereby the connection member is adapted to any possible ovality, so that the width of the gap becomes advantageous for bonding. Tubular profiles with different radius and different ovality can be connected by the one and the same connection member. The slot 15 in the connection member evens out these factors.

The flange 11 on the connection member 10 absorbs tolerances when cutting the ends of the tubular profile ends 17, 18, so that it does not becomes clearly visible if fully symmetrical end cuts was not achieved.

The invention is not limited to the above described embodiments, but more variants are conceivable within the scoop of the following claims. For example, the connection member can be adapted for straight tubular profiles and also be used without adhesive. The connection member can also be used for application of a component in the end of a tube, for example a fastening console or a pushchair wheel.

## Claims

1. A method for joining together two tube ends (17,18) by means of a connection member (10) which is made of an elastic material, for example plastic, and comprising at least one substantially cylindrical dowel (12,13) which is insertable into the end of the tubular profile and at least one peripherally outwards from the envelope surface of the dowel protruding flange (11) for axial positioning of the connection member in the tube end,
**characterized in,**
compressing the connection member (10), so that its external dimensions are smaller than the inner diameter of the tube ends (17,18), which is accomplished by the fact that said connection (10) member is provided with a slot (15) extending in the same plane as the longitudinal axis (16) of the dowel, from its peripheral surface and radially beyond the area of said longitudinal axis,
inserting the connection member (10) into one of the tube ends (17,18), subsequently releasing of the compression of the connection member (10), and
sliding the other tube end onto the connection member (10).

2. A method according to claim 1,
**characterized in,**
applying adhesive into the respective tube ends (17,18) before inserting the connection member (10).

3. A method according to claim 1 or 2, for joining the two ends of a tubular profile (17,18) which has been bent into a ring shape,
**characterized in,**
the orientation of the connection member (10), so that the slot (15) extends substantially perpendicular to the ring plane.

## Patentansprüche

1. Verfahren zum Verbinden zweier Rohrenden (17, 18) mit Hilfe eines Verbindungselements (10), das aus einem elastischen Material, zum Beispiel Kunststoff, hergestellt ist, und zumindest einen im wesentlichen zylindrischen Dübel (12, 13), der in das Ende eines rohrförmigen Profils einsetzbar ist, und zumindest einen aus der Mantelfläche des Dübels am Umfang hervorstehenden Flansch (11) zum axialen Positionieren des Verbindungselements in dem Rohrende aufweist,
**gekennzeichnet durch**
das Zusammendrücken des Verbindungselements (10), so daß seine äußeren Abmessungen kleiner sind als der Innendurchmesser der Rohrenden (17, 18), was durch die Tatsache vollbracht wird, daß das Verbindungselement (10) mit einem Schlitz (15) versehen ist, der sich in der gleichen Ebene wie die Längsachse (16) des Dübels von seiner Umfangsfläche und radial über den Bereich dieser Längsachse hinaus erstreckt, das Einsetzen des Verbindungselements (10) in eines der Rohrenden (17, 18), das anschließende Lösen der Pressung des Verbindungselements (10), und das Schieben des anderen Rohrendes auf das Verbindungselement (10).

2. Verfahren nach Anspruch 1, **gekennzeichnet durch** das Aufbringen von Klebstoff in die jeweiligen Rohrenden (17, 18) vor dem Einsetzen des Verbindungselements (10).

3. Verfahren nach Anspruch 1 oder 2 zum Verbinden der beiden Enden eines rohrförmigen Profils (17, 18), das in eine Ringform gebogen wurde, **gekennzeichnet durch** die Ausrichtung des Verbindungselements (10), so daß sich der Schlitz (15) im wesentlichen senkrecht zu der Ringebene erstreckt.

## Revendications

1. Méthode pour joindre deux extrémités de tube (17, 18) au moyen d'un élément de connexion (10) en matériau élastique, par exemple en matière plastique, comprenant au moins un manchon sensiblement cylindrique (12, 13) apte à être inséré dans l'extrémité du profilé tubulaire et au moins une bride en saillie (11) débordant vers l'extérieur à la périphérie de la surface d'enveloppe du manchon pour le positionnement axial de l'élément de connexion dans l'extrémité du tube,
caractérisée en ce qu'elle consiste à comprimer l'élément de connexion (10), de sorte que ses dimensions externes soient inférieures au diamètre interne des extrémités de tube (17, 18), ce qui est possible du fait que ledit élément de connexion (10) est doté d'une entaille (15) s'étendant radialement depuis la surface périphérique du manchon au-delà de la zone de l'axe longitudinal (16) du manchon et dans le même plan que ledit axe, à insérer l'élément de connexion (10) dans l'une des extrémités de tube (17, 18), en relâchant par la suite la pression appliquée sur l'élément de connexion (10), puis à glisser l'extrémité de l'autre tube sur l'élément de connexion (10).

2. Méthode selon la revendication 1, caractérisée en ce qu'elle prévoit d'appliquer une colle à l'intérieur des extrémités respectives des tubes (17, 18) avant d'insérer l'élément de connexion (10).

3. Méthode selon la revendication 1 ou 2 pour joindre les deux extrémités d'un profilé tubulaire (17, 18) cintré en forme d'anneau, caractérisée en ce que l'élément de connexion (10) est orienté de manière à ce que l'entaille (15) soit sensiblement perpendiculaire au plan de l'anneau.
